# EUROPEAN PATENT SPECIFICATION

(11) **EP 4 011 725 B1**
(45) Date of publication and mention of the grant of the patent: **27.12.2023**
(21) Application number: 22164440.4
(22) Date of filing: 25.03.2022
(51) Int. Cl.: B60T 8/171, B60T 8/172

(54) **BRAKING METHOD AND APPARATUS FOR VEHICLE, ELECTRONIC DEVICE, STORAGE MEDIUM AND PROGRAM PRODUCT**
BREMSVERFAHREN UND -VORRICHTUNG FÜR EIN FAHRZEUG, ELEKTRONISCHE VORRICHTUNG, SPEICHERMEDIUM UND PROGRAMMPRODUKT
PROCÉDÉ ET APPAREIL DE FREINAGE POUR VÉHICULE, DISPOSITIF ÉLECTRONIQUE, SUPPORT DE STOCKAGE ET PRODUIT PROGRAMME

(30) Priority: 18.06.2021 CN 202110680233
(43) Date of publication of application: 15.06.2022
(73) Proprietor: Apollo Intelligent Connectivity (Beijing) Technology Co., Ltd., Beijing 100176 (CN)
(72) Inventor: XING, Liang, Beijing, 100176 (CN); SONG, Shuqing, Beijing, 100176 (CN); YANG, Wentao, Beijing, 100176 (CN); ZHAO, Shuaishuai, Beijing, 100176 (CN); LUO, Qionghua, Beijing, 100176 (CN); WANG, Lifeng, Beijing, 100176 (CN); FENG, Yunchan, Beijing, 100176 (CN); WANG, Tao, Beijing, 100176 (CN); CAO, Xiaochen, Beijing, 100176 (CN); WU, Fuchuang, Beijing, 100176 (CN); WU, Yi, Beijing, 100176 (CN)
(74) Representative: Vossius & Partner Patentanwälte Rechtsanwälte mbB

(56) References cited:
- US-A1- 2002 029 914
- US-A1- 2010 250 081
- US-A1- 2013 338 894
- US-A1- 2015 353 093

## Description

### TECHNICAL FIELD

The present inventionrelates to the technical field of vehicles, and in particular to the field of intelligent vehicles.

### BACKGROUND

In the current teaching process of a driving school, a coach is usually needed to accompany a student to guide and teach the student. At the same time, the coach can assist the student to brake in time when encountering an emergency. However, this teaching mode has a problem that the coach lacks energy in real-time judgment of a situation, and also has another problem that certain situations cannot be dealt with in time.

An intelligent teaching vehicle can replace the coach, and an electronic coach is used to assist the coach and the student in braking. However, due to different braking characteristics of each vehicle, an unchanging braking program is not suitable for every vehicle, resulting in poor somatic sensation when braking.

US2013/338894A1 discloses an accelerator pedal operated braking system for an automatic transmission vehicle; said braking system including monitoring of angular data and angular rate of change data of an accelerator pedal of said vehicle; said system further including a control module and an actuator acting on the brake pedal of said vehicle; said braking system responsive to said angular data and angular rate of change data.

### SUMMARY

The invention is set out by the appended set of claims.

The present invention provides a braking method and apparatus for a vehicle, a device, a storage medium, a computer program product, and a vehicle.

According to a first aspect of the present invention, a braking method for a vehicle is provided, which includes:
generating, in a case where a braking trigger signal is received, a first braking control signal according to a first braking parameter of the vehicle, wherein the first braking control signal is used to control a braking traction mechanism to draw a brake pedal according to the first braking parameter, to perform braking;
collecting braking data of a current braking process;
evaluating a braking effect of the current braking process according to the collected braking data; and
determining whether to adjust the first braking parameter according to a result of the evaluating, wherein the determined first braking parameter is used for a next braking process of the vehicle, wherein the collecting the braking data of the current braking process comprises: collecting at least one of position data, vehicle speed data, acceleration data or jerk data of the vehicle in the current braking process, wherein the evaluating the braking effect of the current braking process according to the collected braking data comprises: determining a braking distance in the current braking process according to the collected position data; determining somatosensory information of the current braking process according to the collected vehicle speed data, acceleration data and jerk data; and evaluating the braking effect according to the braking distance and the somatosensory information.

According to a second aspect of the present invention, a braking apparatus for a vehicle is provided, which includes:
a first braking control signal generation module, configured for generating, in a case where a braking trigger signal is received, a first braking control signal according to a first braking parameter of the vehicle, wherein the first braking control signal is used to control a braking traction mechanism to draw a brake pedal according to the first braking parameter, to perform braking;
a collection module, configured for collecting braking data of a current braking process;
an evaluation module, configured for evaluating a braking effect of the current braking process according to the collected braking data; and
a first braking parameter determination module, configured for determining whether to adjust the first braking parameter according to a result of the evaluating, wherein the determined first braking parameter is used for a next braking process of the vehicle, wherein the collection module is further configured for collecting at least one of position data, vehicle speed data, acceleration data or jerk data of the vehicle in the current braking process, wherein the evaluation module comprises: a braking distance determination unit, configured for determining a braking distance in the current braking process according to the collected position data; a somatosensory information determination unit, configured for determining somatosensory information of the current braking process according to the collected vehicle speed data, acceleration data and jerk data; and an evaluation unit, configured for evaluating the braking effect according to the braking distance and the somatosensory information.

According to a third aspect of the present invention, an electronic device is provided, which includes:
at least one processor; and
a memory communicatively connected with at least one processor; wherein
the memory stores instructions executable by the at least one processor, and the instructions, when executed by the at least one processor, enable the at least one processor to perform the method provided by any embodiment of the present invention.

According to a fourth aspect of the present invention, there is provided a non-transitory computer-readable storage medium storing computer instructions, wherein the computer instructions, when executed by a computer, cause the computer to perform the method provided by any embodiment of the present invention.

According to a fifth aspect of the present invention, there is provided a computer program product including a computer program, wherein the computer program, when executed by a processor, implements the method provided by any embodiment of the present invention.

According to a sixth aspect of the present invention, there is provided a vehicle including the braking apparatus or the electronic device provided by any embodiment of the present invention.

The technical solutions of embodiments of the present invention can be applied to an intelligent training vehicle, and can automatically calibrate braking parameters of the vehicle, thereby optimizing the braking effect and improving the user's somatic sensation.

### BRIEF DESCRIPTION OF THE DRAWINGS

The drawings are used to better understand the solution and do not constitute a limitation to the present invention, wherein:
FIG. 1 is a flowchart of a braking method for a vehicle according to an embodiment of the present invention;
FIG. 2 is a schematic diagram of an application scenario according to an embodiment of the present invention;
FIG. 3 is a schematic diagram of an application example according to an embodiment of the present invention;
FIG. 4 is a block diagram of a braking apparatus for a vehicle according to an embodiment of the present invention;
FIG. 5 is a block diagram of a braking apparatus for a vehicle according to one implementation of an embodiment of the present invention; and
FIG. 6 is a block diagram of an electronic device for implementing the method according to an embodiment of the present invention.

### DETAILED DESCRIPTION

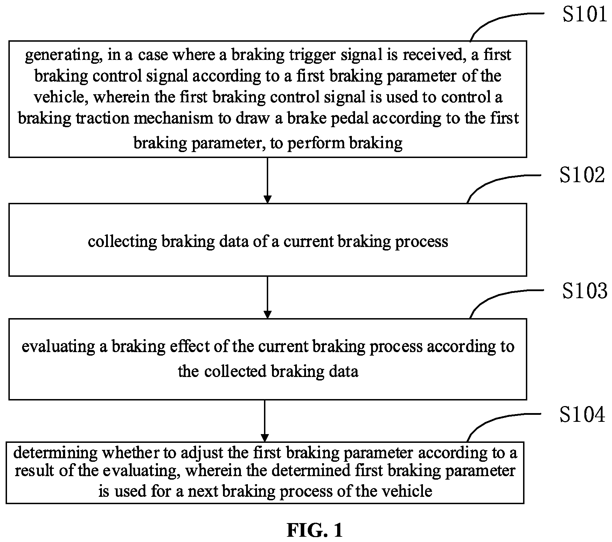

FIG. 1 shows a braking method for a vehicle according to an embodiment of the present invention. As shown in FIG. 1, the method includes:
S101, generating, in a case where a braking trigger signal is received, a first braking control signal according to a first braking parameter of the vehicle, wherein the first braking control signal is used to control a braking traction mechanism to draw a brake pedal according to the first braking parameter, to perform braking;
S102, collecting braking data of a current braking process;
S103, evaluating a braking effect of the current braking process according to the collected braking data; and
S104, determining whether to adjust the first braking parameter according to a result of the evaluating, wherein the determined first braking parameter is used for a next braking process of the vehicle.

The method of this embodiment can be applied to an intelligent teaching vehicle in a driving school. The intelligent teaching vehicle can replace a coach, and an electronic coach is used to assist the coach and a student in braking.

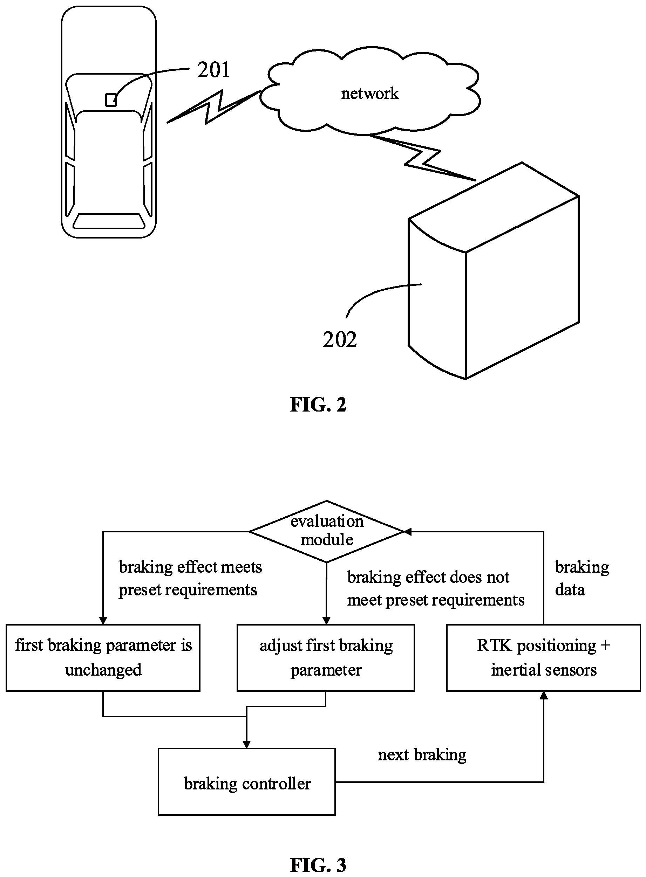

FIG. 2 is a schematic diagram of an application scenario according to an embodiment of the present invention. As shown in FIG. 2, a vehicle is equipped with a vehicle-mounted terminal 201, and the vehicle-mounted terminal 201 may be a hardware, for example, an electronic device with a display screen, such as a mobile phone, a tablet, a portable computer, and so on. In a case where the vehicle-mounted terminal 201 is a software or an Application (APP), it can be installed in the above-mentioned electronic device. A server 202 can provide various services, for example, providing support for an application installed on the vehicle-mounted terminal 201. The method provided by the embodiment of the present invention can be performed by the server 202 or the vehicle-mounted terminal 201, and an apparatus corresponding to the method can be provided in the vehicle-mounted terminal 201 or the server 202. Herein, any number of vehicle-mounted terminals, networks and servers can be configured in order to meet the needs.

In one example, a positioning device is installed on the vehicle, and a teaching application can acquire the position of the vehicle in real time. In a case where the vehicle reaches a specified position, the teaching application will issue a braking trigger signal.

In another example, a plurality of sensors are installed on the vehicle, to sense obstacles, distances, positions and so on. Based on sensing data of these sensors, a safety protection application can send a braking trigger signal before colliding with an obstacle and in a case of speeding, rolling, or driving out of a prescribed area, etc.

A braking traction mechanism and a braking controller can be provided on the vehicle. In S101, in a case where the braking trigger signal is received, the first braking control signal can be generated according to the current first braking parameter of the vehicle. After receiving the first braking control signal, a braking controller can control a braking traction mechanism to draw a brake pedal in accordance with the current first braking parameter to perform braking, thus completing the current braking process.

Illustratively, the braking traction mechanism includes a braking control motor and a wire rope. The braking control motor drives a connecting spool, upon which the wire rope is wound. The end of the wire rope are fixedly installed on a connecting arm of the brake pedal. The braking control motor controls depression of the brake pedal by tightening the wire rope. After receiving the first braking control signal, the braking controller sends an instruction to the braking control motor, the instruction including the current first braking parameter.

In one implementation, the first braking parameter includes a braking traction absolute value, a braking traction speed and a braking traction acceleration. As such, in the process of braking, the amount of depression, a depression speed, and a depression acceleration of the brake pedal can all be taken into account, thereby improving the user's somatic sensation.

Furthermore, in S 102, the braking data can be collected in real time in the current braking process, and used to evaluate the braking effect of the current braking process in S103.

In one implementation, S102 may include: collecting at least one of position data, vehicle speed data, acceleration data or jerk data of the vehicle in the current braking process, so as to provide an evaluation criterion for the braking effect.

Illustratively, the braking data can be collected based on the real-time kinematic (RTK) positioning technology and inertial sensors. The braking data may include position data of the vehicle, vehicle speed data, acceleration data, jerk data, and so on.

In one implementation, S103 may include: determining a braking distance in the current braking process according to the collected position data; determining somatosensory information of the current braking process according to the collected vehicle speed data, acceleration data and jerk data; and evaluating the braking effect according to the braking distance and the somatosensory information.

Illustratively, as shown in FIG. 3, an evaluation module can determine a braking distance based on position data of a vehicle, determine somatosensory information based on vehicle speed data, acceleration data and jerk data, and then evaluate the braking effect by taking the braking distance and the somatosensory information as an evaluation criterion.

Furthermore, in S103, the braking effect of the current braking process can be evaluated according to the collected braking data of the current braking process. In S104, in a case where the result of the evaluating is that the braking effect meets a preset requirement, the current first braking parameter is kept unchanged, that is, the current first braking parameter is saved for use in the next braking process of the vehicle; in a case where the result of the evaluating is that the braking effect does not meet the preset requirement, the current first braking parameter is adjusted, and the adjusted first braking parameter is saved for use in the next braking process of the vehicle. Illustratively, an automatic calibration (adjustment) program according to the embodiment of the present invention can be constructed based on a reinforcement learning model.

According to the braking method of the embodiment of the present invention, braking characteristics of each vehicle can be calibrated automatically, allowing the application to quickly adapt to each vehicle. Illustratively, in a case where the vehicle is initially used, the first braking parameter can be preset. According to the braking method of this embodiment, braking occurs during use - the braking effect is evaluated - the braking effect does not meet the preset requirement - the first braking parameter is adjusted - next braking occurs - the braking effect is evaluated - the braking effect does not meet the preset requirement - the first braking parameter is adjusted ... until the braking effect meets the preset requirement, at this time the first braking parameter is saved, that is, the automatic calibration program adapted to the braking characteristics of the vehicle is completed.

Moreover, according to the braking method of the embodiment of the present invention, this automatic calibration program will be continuously and automatically adjusted in the subsequent use. Once the braking effect does not meet the preset requirement, the first braking parameter will be adjusted again and the calibration will be cycled, so that the calibration will become more and more accurate and can also adapt to the gradual changes in the braking characteristics of the vehicle after long-term use.

In one implementation, the method of the embodiment of the present invention may further include: generating, in a case where the braking trigger signal is received, a second braking control signal according to a second braking parameter of the vehicle, wherein the second braking control signal is used to control a clutch traction mechanism to draw a clutch pedal according to the second braking parameter, to separate an engine of the vehicle from a gearbox of the vehicle.

After receiving the second braking control signal, a clutch controller can control the clutch traction mechanism to draw the clutch pedal in accordance with the current second braking parameter. Illustratively, the clutch traction mechanism includes a clutch control motor and a wire rope. The clutch control motor drives a connecting spool, upon which the wire rope is wound. The end of the wire rope is fixedly installed on a connecting arm of the clutch pedal. The clutch control motor controls depression of the clutch pedal by tightening the wire rope. After receiving the second braking control signal, the clutch controller sends an instruction to the clutch control motor, the instruction including the current second braking parameter.

In one implementation, the second braking parameter includes a clutch traction absolute value, a clutch traction speed and a clutch traction acceleration. As such, in the braking process, the amount of depression, a depression speed and a depression acceleration of the clutch pedal can all be taken into account, thereby improving the user's somatic sensation and better protecting the clutch.

The braking method according to this embodiment includes the operation of the clutch pedal, which, through the cooperation of the clutch and the brake, improves the somatic sensation and can protect the clutch of the vehicle. In addition, the braking method of this embodiment can automatically adjust the braking parameters according to the characteristics of the vehicle and the braking effect, so that the braking effect becomes more and more ideal and more accurate, and the user's somatic sensation can be greatly improved.

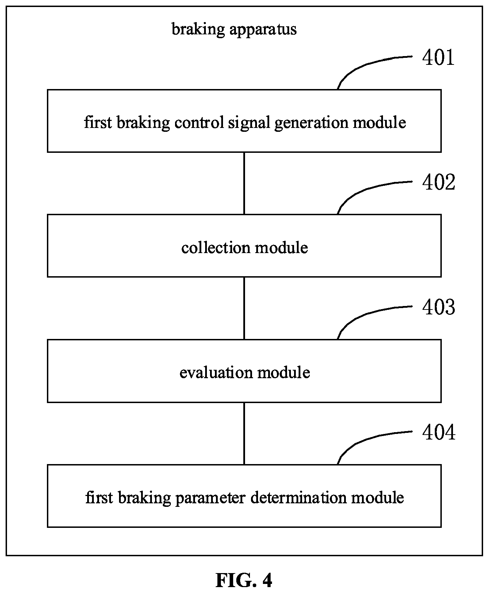

FIG. 4 shows a block diagram of a braking apparatus for a vehicle according to an embodiment of the present invention. As shown in FIG. 4, the apparatus includes:
a first braking control signal generation module 401, configured for generating, in a case where a braking trigger signal is received, a first braking control signal according to a first braking parameter of the vehicle, wherein the first braking control signal is used to control a braking traction mechanism to draw a brake pedal according to the first braking parameter, to perform braking;
a collection module 402, configured for collecting braking data of a current braking process;
an evaluation module 403, configured for evaluating a braking effect of the current braking process according to the collected braking data; and
a first braking parameter determination module 404, configured for determining whether to adjust the first braking parameter according to a result of the evaluating, and the determined first braking parameter is used for a next braking process of the vehicle.

In one implementation, the collection module 402 is further configured for collecting at least one of position data, vehicle speed data, acceleration data or jerk data of the vehicle in the current braking process.

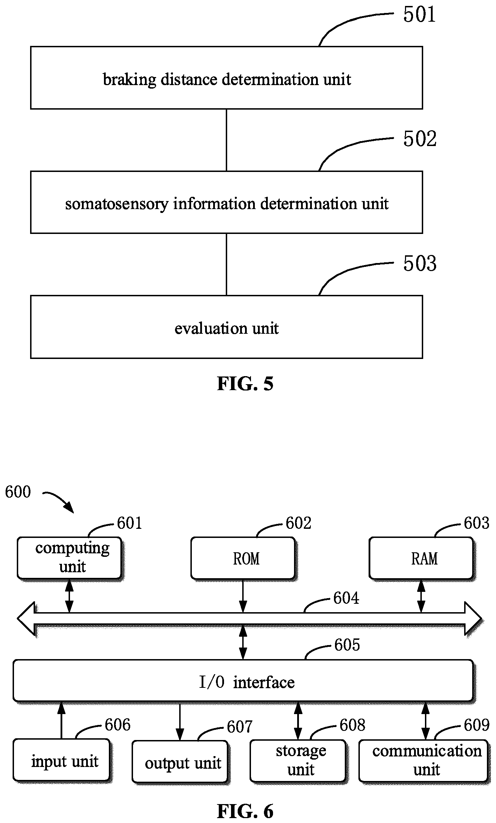

In one implementation, as shown in FIG. 5, the evaluation module 403 includes:
a braking distance determination unit 501, configured for determining a braking distance in the current braking process according to the collected position data;
a somatosensory information determination unit 502, configured for determining somatosensory information of the current braking process according to the collected vehicle speed data, acceleration data and jerk data; and
an evaluation unit 503, configured for evaluating the braking effect according to the braking distance and the somatosensory information.

In one implementation, the first braking parameter includes a braking traction absolute value, a braking traction speed and a braking traction acceleration.

In one implementation, the braking apparatus of the embodiment of the present invention may further include:
a second braking control signal generation module, configured for generating, in a case where the braking trigger signal is received, a second braking control signal according to a second braking parameter of the vehicle, wherein the second braking control signal is used to control a clutch traction mechanism to draw a clutch pedal according to the second braking parameter, so as to separate an engine of the vehicle from a gearbox of the vehicle.

In one implementation, the second braking parameter includes a clutch traction absolute value, a clutch traction speed and a clutch traction acceleration.

The functions of respective modules in respective apparatuses of the embodiments of the present invention may refer to corresponding descriptions of the above method, and will not be described in detail herein.

According to embodiments of the present invention, the present invention also provides an electronic device, a readable storage medium and a computer program product.

FIG. 6 shows a schematic block diagram of an example electronic device 600 that may be used to implement embodiments of the present invention. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present invention described and/or claimed herein.

As shown in FIG. 6, the electronic device 600 includes a computing unit 601 that may perform various suitable actions and processes according to computer programs stored in a read only memory (ROM) 602 or computer programs loaded from a storage unit 608 into a random access memory (RAM) 603. In the RAM 603, various programs and data required for the operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, a modem, a wireless communication transceiver, etc. The communication unit 609 allows the electronic device 600 to exchange information/data with other devices over a computer network, such as the Internet, and/or various telecommunications networks.

The computing unit 601 may be various general purpose and/or special purpose processing assemblies having processing and computing capabilities. Some examples of the computing unit 601 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 601 performs various methods and processes described above. For example, in some embodiments, the braking method may be implemented as computer software programs that are physically contained in a machine-readable medium, such as the storage unit 608. In some embodiments, some or all of the computer programs may be loaded into and/or installed on the electronic device 600 via the ROM 602 and/or the communication unit 609. In a case where the computer programs are loaded into the RAM 603 and executed by the computing unit 601, one or more of steps of the above braking method may be performed. Alternatively, in other embodiments, the computing unit 601 may be configured to perform the above braking method in any other suitable manner (e.g., by means of a firmware).

Various implementations of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present invention may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present invention, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described herein may be implemented on a computer having: a display device (e.g., a cathode ray tube (CRT) or a liquid crystal display (LCD) monitor) for displaying information to the user; and a keyboard and a pointing device (e.g., a mouse or a trackball), through which the user can provide an input to the computer. Other kinds of devices can also be used to provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with implementations of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other. The server may be a cloud server, may also be a server of a distributed system, or a server incorporating a blockchain.

## Claims

1. A braking method for a vehicle, comprising:
generating (S101), in a case where a braking trigger signal is received, a first braking control signal according to a first braking parameter of the vehicle, wherein the first braking control signal is used to control a braking traction mechanism to draw a brake pedal according to the first braking parameter, to perform braking;
collecting (S102) braking data of a current braking process;
evaluating (S103) a braking effect of the current braking process according to the collected braking data; and
determining (S104) whether to adjust the first braking parameter according to a result of the evaluating, wherein the determined first braking parameter is used for a next braking process of the vehicle,
wherein the collecting (S102) the braking data of the current braking process comprises:
collecting at least one of position data, vehicle speed data, acceleration data or jerk data of the vehicle in the current braking process,
wherein the evaluating (S103) the braking effect of the current braking process according to the collected braking data comprises:
determining a braking distance in the current braking process according to the collected position data;
determining somatosensory information of the current braking process according to the collected vehicle speed data, acceleration data and jerk data; and
evaluating the braking effect according to the braking distance and the somatosensory information.

2. The braking method of claim 1, wherein the first braking parameter comprises a braking traction absolute value, a braking traction speed and a braking traction acceleration.

3. The braking method of claim 1 or 2, further comprising:
generating, in a case where the braking trigger signal is received, a second braking control signal according to a second braking parameter of the vehicle, wherein the second braking control signal is used to control a clutch traction mechanism to draw a clutch pedal according to the second braking parameter, to separate an engine of the vehicle from a gearbox of the vehicle.

4. The braking method of claim 3, wherein the second braking parameter comprises a clutch traction absolute value, a clutch traction speed and a clutch traction acceleration.

5. A braking apparatus for a vehicle, comprising:
a first braking control signal generation module (401), configured for generating, in a case where a braking trigger signal is received, a first braking control signal according to a first braking parameter of the vehicle, wherein the first braking control signal is used to control a braking traction mechanism to draw a brake pedal according to the first braking parameter, to perform braking;
a collection module (402), configured for collecting braking data of a current braking process;
an evaluation module (403), configured for evaluating a braking effect of the current braking process according to the collected braking data; and
a first braking parameter determination module (404), configured for determining whether to adjust the first braking parameter according to a result of the evaluating, wherein the determined first braking parameter is used for a next braking process of the vehicle,
wherein the collection module (402) is further configured for collecting at least one of position data, vehicle speed data, acceleration data or jerk data of the vehicle in the current braking process,
wherein the evaluation module (403) comprises:
a braking distance determination unit (501), configured for determining a braking distance in the current braking process according to the collected position data;
a somatosensory information determination unit (502), configured for determining somatosensory information of the current braking process according to the collected vehicle speed data, acceleration data and jerk data; and
an evaluation unit (503), configured for evaluating the braking effect according to the braking distance and the somatosensory information.

6. The braking apparatus of claim 5, wherein the first braking parameter comprises a braking traction absolute value, a braking traction speed and a braking traction acceleration.

7. The braking apparatus of claim 5 or 6, further comprising:
a second braking control signal generation module, configured for generating, in a case where the braking trigger signal is received, a second braking control signal according to a second braking parameter of the vehicle, wherein the second braking control signal is used to control a clutch traction mechanism to draw a clutch pedal according to the second braking parameter, to separate an engine of the vehicle from a gearbox of the vehicle.

8. The braking apparatus of claim 7, wherein the second braking parameter comprises a clutch traction absolute value, a clutch traction speed and a clutch traction acceleration.

9. A non-transitory computer readable storage medium storing computer instructions, wherein the computer instructions, when executed by a computer, cause the computer to perform the method of any one of claims 1 to 4.

10. A computer program product comprising a computer program, wherein the computer program, when executed by a processor, implements the method of any one of claims 1 to 4.

11. A vehicle comprising the braking apparatus of any one of claims 5 to 8.

## Patentansprüche

1. Bremsverfahren für ein Fahrzeug, das aufweist:
Erzeugen (S101), in einem Fall, in dem ein Bremsauslösesignal empfangen wird, eines ersten Bremssteuersignals gemäß einem ersten Bremsparameter des Fahrzeugs, wobei das erste Bremssteuersignal verwendet wird, um einen Bremsantriebsmechanismus zu steuern, um ein Bremspedal gemäß dem ersten Bremsparameter zu ziehen, um eine Bremsung durchzuführen;
Sammeln (S102) von Bremsdaten eines aktuellen Bremsvorgangs;
Auswerten (S103) einer Bremswirkung des aktuellen Bremsvorgangs gemäß den gesammelten Bremsdaten; und
Bestimmen (S 104), ob der erste Bremsparameter gemäß einem Ergebnis der Auswertung angepasst werden soll, wobei der bestimmte erste Bremsparameter für einen nächsten Bremsvorgang des Fahrzeugs verwendet wird,
wobei das Sammeln (S102) der Bremsdaten des aktuellen Bremsvorgangs aufweist:
Sammeln von mindestens einem von Positionsdaten, Fahrzeuggeschwindigkeitsdaten, Beschleunigungsdaten oder Ruckdaten des Fahrzeugs im aktuellen Bremsvorgangs,
wobei das Auswerten (S103) der Bremswirkung des aktuellen Bremsvorgangs gemäß den gesammelten Bremsdaten aufweist:
Bestimmen eines Bremswegs im aktuellen Bremsvorgang entsprechend den gesammelten Positionsdaten;
Bestimmen somatosensorischer Informationen des aktuellen Bremsvorgangs gemäß den gesammelten Fahrzeuggeschwindigkeitsdaten, Beschleunigungsdaten und Ruckdaten; und
Auswerten der Bremswirkung gemäß dem Bremsweg und den somatosensorischen Informationen.

2. Bremsverfahren nach Anspruch 1, wobei der erste Bremsparameter einen Bremsantriebs-Absolutwert, eine Bremsantriebs-Geschwindigkeit und eine Bremsantriebs-Beschleunigung aufweist.

3. Bremsverfahren nach Anspruch 1 oder 2, das ferner aufweist:
Erzeugen, in einem Fall, in dem das Bremsauslösesignal empfangen wird, eines zweiten Bremssteuersignals gemäß einem zweiten Bremsparameter des Fahrzeugs, wobei das zweite Bremssteuersignal verwendet wird, um einen Kupplungsantriebsmechanismus zu steuern, um ein Kupplungspedal gemäß dem zweiten Bremsparameter zu ziehen, um einen Motor des Fahrzeugs von einem Getriebe des Fahrzeugs zu trennen.

4. Bremsverfahren nach Anspruch 3, wobei der zweite Bremsparameter einen Kupplungsantriebs-Absolutwert, eine Kupplungsantriebs-Geschwindigkeit und eine Kupplungsantriebs-Beschleunigung aufweist.

5. Bremsvorrichtung für ein Fahrzeug, die aufweist:
ein erstes Bremssteuersignal-Erzeugungsmodul (401), das konfiguriert ist, in einem Fall, in dem ein Bremsauslösesignal empfangen wird, ein erstes Bremssteuersignal gemäß einem ersten Bremsparameter des Fahrzeugs zu erzeugen, wobei das erste Bremssteuersignal verwendet wird, um einen Bremsantriebsmechanismus zu steuern, um ein Bremspedal gemäß dem ersten Bremsparameter zu ziehen, um eine Bremsung durchzuführen;
ein Sammelmodul (402), das zum Sammeln von Bremsdaten eines aktuellen Bremsvorgangs konfiguriert ist;
ein Auswertungsmodul (403), das zum Auswerten einer Bremswirkung des aktuellen Bremsvorgangs gemäß den gesammelten Bremsdaten konfiguriert ist; und
ein erstes Bremsparameter-Bestimmungsmodul (404), das konfiguriert ist, zu bestimmen, ob der erste Bremsparameter gemäß einem Ergebnis der Auswertung angepasst werden soll, wobei der bestimmte erste Bremsparameter für einen nächsten Bremsvorgang des Fahrzeugs verwendet wird,
wobei das Sammelmodul (402) ferner zum Sammeln von zumindest einem von Positionsdaten, Fahrzeuggeschwindigkeitsdaten, Beschleunigungsdaten oder Ruckdaten des Fahrzeugs im aktuellen Bremsvorgang konfiguriert ist,
wobei das Auswertungsmodul (403) aufweist:
eine Bremsweg-Bestimmungseinheit (501), die zum Bestimmen eines Bremswegs im aktuellen Bremsvorgang in Abhängigkeit von den gesammelten Positionsdaten konfiguriert ist;
eine somatosensorische Informationsbestimmungseinheit (502), die zum Bestimmen von somatosensorischer Information des aktuellen Bremsvorgangs gemäß den gesammelten Fahrzeuggeschwindigkeitsdaten, Beschleunigungsdaten und Ruckdaten konfiguriert ist; und
eine Auswertungseinheit (503), die zum Auswerten der Bremswirkung gemäß dem Bremsweg und den somatosensorischen Informationen konfiguriert ist.

6. Bremsvorrichtung nach Anspruch 5, wobei der erste Bremsparameter einen Bremsantriebs-Absolutwert, eine Bremsantriebs-Geschwindigkeit und eine Bremsantriebs-Beschleunigung aufweist.

7. Bremsvorrichtung nach Anspruch 5 oder 6, die ferner aufweist:
ein zweites Bremssteuersignal-Erzeugungsmodul, das konfiguriert ist, in einem Fall, in dem das Bremsauslösesignal empfangen wird, ein zweites Bremssteuersignal entsprechend einem zweiten Bremsparameter des Fahrzeugs zu erzeugen, wobei das zweite Bremssteuersignal verwendet wird, um einen Kupplungsantriebsmechanismus zu steuern, um ein Kupplungspedal entsprechend dem zweiten Bremsparameter zu ziehen, um einen Motor des Fahrzeugs von einem Getriebe des Fahrzeugs zu trennen.

8. Bremsvorrichtung nach Anspruch 7, wobei der zweite Bremsparameter einen Kupplungsantriebs-Absolutwert, eine Kupplungsantriebs-Geschwindigkeit und eine Kupplungsantriebs-Beschleunigung aufweist.

9. Nichtflüchtiges computerlesbares Speichermedium, das Computerbefehle speichert, wobei die Computerbefehle, wenn sie von einem Computer ausgeführt werden, den Computer veranlassen, das Verfahren nach einem der Ansprüche 1 bis 4 durchzuführen.

10. Computerprogrammprodukt, das ein Computerprogramm aufweist, wobei das Computerprogramm, wenn es von einem Prozessor ausgeführt wird, das Verfahren nach einem der Ansprüche 1 bis 4 implementiert.

11. Fahrzeug, das die Bremsvorrichtung nach einem der Ansprüche 5 bis 8 aufweist.

## Revendications

1. Procédé de freinage pour un véhicule, comprenant :
la génération (S101), dans le cas où un signal de déclenchement de freinage est reçu, d'un premier signal de commande de freinage en fonction d'un premier paramètre de freinage du véhicule, ledit premier signal de commande de freinage étant utilisé pour commander un mécanisme de traction de freinage afin tirer une pédale de frein en fonction dudit premier paramètre de freinage, pour effectuer le freinage ;
la collecte (S102) de données de freinage d'un processus de freinage en cours ;
l'évaluation (S103) d'un effet de freinage du processus de freinage en cours en fonction des données de freinage collectées ; et
la détermination (S104) s'il convient d'ajuster le premier paramètre de freinage en fonction du résultat de l'évaluation, le premier paramètre de freinage déterminé étant utilisé pour le prochain processus de freinage du véhicule,
où la collecte (S102) des données de freinage du processus de freinage en cours comprend :
la collecte des données de position et/ou de vitesse du véhicule et/ou d'accélération et/ou de cahotement du véhicule lors du processus de freinage en cours,
où l'évaluation (S103) de l'effet de freinage du processus de freinage en cours en fonction des données de freinage collectées comprend :
la détermination d'une distance de freinage lors du processus de freinage en cours en fonction des données de position collectées ;
la détermination des informations somatosensorielles du processus de freinage en cours en fonction des données de vitesse du véhicule, des données d'accélération et des données de cahotement collectées ; et
l'évaluation de l'effet de freinage en fonction de la distance de freinage et des informations somatosensorielles.

2. Procédé de freinage selon la revendication 1, où le premier paramètre de freinage comprend une valeur absolue de traction de freinage, une vitesse de traction de freinage et une accélération de traction de freinage.

3. Procédé de freinage selon la revendication 1 ou la revendication 2, comprenant en outre :
la génération, dans le cas où le signal de déclenchement de freinage est reçu, d'un deuxième signal de commande de freinage en fonction d'un deuxième paramètre de freinage du véhicule, ledit deuxième signal de commande de freinage étant utilisé pour commander un mécanisme de traction d'embrayage afin de tirer une pédale d'embrayage en fonction du deuxième paramètre de freinage, pour séparer un moteur du véhicule d'une boîte de vitesses du véhicule.

4. Procédé de freinage selon la revendication 3, où le deuxième paramètre de freinage comprend une valeur absolue de traction d'embrayage, une vitesse de traction d'embrayage et une accélération de traction d'embrayage.

5. Appareil de freinage pour un véhicule, comprenant :
un premier module de génération de signal de commande de freinage (401), prévu pour générer, dans le cas où un signal de déclenchement de freinage est reçu, un premier signal de commande de freinage en fonction d'un premier paramètre de freinage du véhicule, ledit premier signal de commande de freinage étant utilisé pour commander un mécanisme de traction de freinage afin tirer une pédale de frein en fonction dudit premier paramètre de freinage, pour effectuer le freinage ;
un module de collecte (402), prévu pour collecter des données de freinage d'un processus de freinage en cours ;
un module d'évaluation (403), prévu pour évaluer un effet de freinage du processus de freinage en cours en fonction des données de freinage collectées ; et
un module de détermination du premier paramètre de freinage (404), prévu pour déterminer s'il convient d'ajuster le premier paramètre de freinage en fonction d'un résultat de l'évaluation, le premier paramètre de freinage déterminé étant utilisé pour un prochain processus de freinage du véhicule,
où le module de collecte (402) est en outre prévu pour collecter des données de position et/ou de vitesse du véhicule et/ou d'accélération et/ou de cahotement du véhicule lors du processus de freinage en cours,
où le module d'évaluation (403) comprend :
une unité de détermination de la distance de freinage (501), prévue pour déterminer une distance de freinage lors du processus de freinage en cours en fonction des données de position collectées ;
une unité de détermination d'informations somatosensorielles (502), prévue pour déterminer les informations somatosensorielles du processus de freinage en cours en fonction des données de vitesse du véhicule, des données d'accélération et des données de cahotement collectées ; et
une unité d'évaluation (503), prévue pour évaluer l'effet de freinage en fonction de la distance de freinage et des informations somatosensorielles.

6. Appareil de freinage selon la revendication 5, où le premier paramètre de freinage comprend une valeur absolue de traction de freinage, une vitesse de traction de freinage et une accélération de traction de freinage.

7. Appareil de freinage selon la revendication 5 ou la revendication 6, comprenant en outre : un deuxième module de génération de signal de commande de freinage, prévu pour générer, dans le cas où le signal de déclenchement de freinage est reçu, un deuxième signal de commande de freinage en fonction d'un deuxième paramètre de freinage du véhicule, ledit deuxième signal de commande de freinage étant utilisé pour commander un mécanisme de traction d'embrayage afin de tirer une pédale d'embrayage en fonction du deuxième paramètre de freinage, pour séparer un moteur du véhicule d'une boîte de vitesses du véhicule.

8. Appareil de freinage selon la revendication 7, où le deuxième paramètre de freinage comprend une valeur absolue de traction d'embrayage, une vitesse de traction d'embrayage et une accélération de traction d'embrayage.

9. Support d'enregistrement non transitoire lisible par ordinateur, stockant des instructions informatiques, l'exécution par un ordinateur desdites instructions informatiques entraînant la mise en oeuvre par ledit ordinateur du procédé selon l'une des revendications 1 à 4.

10. Produit de programme informatique comprenant un programme informatique, l'exécution par un processeur dudit programme informatique mettant en oeuvre le procédé selon l'une des revendications 1 à 4.

11. Véhicule, comprenant l'appareil de freinage selon l'une des revendications 5 à 8.
